# EUROPEAN PATENT APPLICATION

(11) **EP 4 733 019 A1**
(43) Date of publication of application: **29.04.2026**
(21) Application number: 25209968.4
(22) Date of filing: 21.10.2025
(51) Int. Cl.: B26D 7/00, F16J 15/00, B26D 1/153, B26D 7/06, B26D 7/26

(54) **FOOD PRODUCT SLICER AND ASSOCIATED SEALING ASSEMBLY FOR GAUGE PLATE PLANE ADJUSTMENT ASSEMBLY**

(30) Priority: 25.10.2024 US 202463712146 P; 10.10.2025 US 202519355575
(71) Applicant: Illinois Tool Works Inc., Glenview IL 60025 (US)
(72) Inventor: BIRD, Matthew W., Glenview, 60025 (US); MANJUNAATH, Sumuk, Glenview, 60025 (US)
(74) Representative: HGF

(57) **Abstract**

A food product slicer includes a base, a knife mounted for rotation relative to the base, a carriage assembly mounted to the base for reciprocal movement back and forth past a cutting edge of the knife, a gauge plate mounted for movement between a closed position that prevents slicing and multiple open positions that permit slicing at respective thicknesses, and a gauge plate plane adjustment assembly for adjusting an orientation of a plane of the gauge plate relative to a plane of an edge of the knife. A seal assembly covers the gauge plate plane adjustment assembly and has first and second seal parts that are movable relative to each other between a sealing configuration of the seal assembly and an access configuration of the seal assembly.

## Description

### TECHNICAL FIELD

This application relates generally to food product slicers of the type commonly used to slice bulk food products and, more specifically, to a seal assembly for a gauge plate plane adjustment assembly in such a food product slicer.

### BACKGROUND

Typical reciprocating food slicers have a rotatable, circular or disc-like slicing blade, an adjustable gauge plate for defining the thickness of the slice and a carriage for supporting the food as it is moved back and forth past the cutting edge of the knife during slicing. A drive motor may be linked to drive the carriage back and forth during an automatic slicing operation carried out by a controller of the slicer. The gauge plate is situated along the edge of the knife toward the front of a slicing stroke and is laterally movable with respect to the knife for setting the thickness of the slices to be cut. A rotatable adjustment or indexing knob is provided manually for setting a spacing between the plane of the gauge plate surface and the plane of the knife edge, so that operators can select a thickness of slices to be produced. In this regard, aligning the plane of the gauge plate slide surface with the plane of the knife edge has presented challenges.

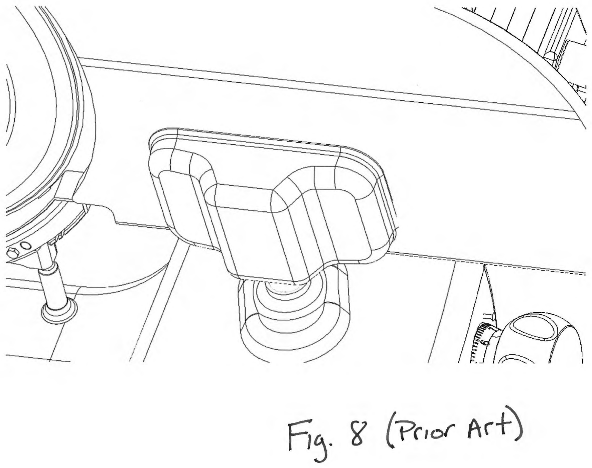

U.S. Patent No. 5,970,840 discloses a gauge plate adjustment assembly in which four set screws act as the adjustment set screws for defining the gauge plate orientation. To adjust the plane of the gauge plate, the clamping screws or bolts are first loosened. The gauge plate can then be shifted around a bit, and the set screws can adjust the relative height at each location. Once the position of the gauge plate is correct, the clamping screws or bolts can then be tightened. Fig. 8 shows an exemplary cover/boot for such as system. This cover/boot provides a partial seal and allows for access to the adjustment hardware. The cover can be peeled off, folded down, and moved out of the way for adjustment hardware access. This system works well, but has some limitations: such as the entire system is not sealed, multiple boots/seals are required and boot location is undesirable.

An alternative solution that several machines in the market employ, is to move the adjustment of the gauge plate internal to the machine. The adjustment hardware components are no longer exposed externally, and all seals operate as only seals. The major negative of this configuration, is that access to the hardware is from the under-side of the machine. Practically, this makes performing a gauge plate adjustment fairly difficult as gauge plate checking occurs at the top of the machine and adjustment occurs underneath the machine.

Accordingly, it would be desirable to provide a slicer with a gauge plate plane adjustment assembly that is accessible from the top and that is also fully sealed.

### SUMMARY

In one aspect, a food product slicer includes a base, a knife mounted for rotation relative to the base, a carriage assembly mounted to the base for reciprocal movement back and forth past a cutting edge of the knife, a gauge plate mounted for movement between a closed position that prevents slicing and multiple open positions that permit slicing at respective thicknesses, and a gauge plate plane adjustment assembly for adjusting an orientation of a plane of the gauge plate relative to a plane of an edge of the knife. A seal assembly covers the gauge plate plane adjustment assembly and has first and second seal parts that are movable relative to each other between a sealing configuration of the seal assembly and an access configuration of the seal assembly.

The details of one or more embodiments are set forth in the accompanying drawings and the description below. Other features, objects, and advantages will be apparent from the description and drawings, and from the claims.

### BRIEF DESCRIPTION OF DRAWINGS

Figs. 1 and 2 show a food product slicer;
Fig. 3 shows portion of the food product slicer;
Fig. 4 shows a seal assembly for the gauge plate plane adjustment assembly;
Fig. 5 shows the seal removed;
Figs.6 shows the seal assembly adjusted to an access position to enable gauge plate plane adjustment;
Fig. 7 shows a cross-section of the seal assembly; and
Fig. 8 shows a prior art system.

### DETAILED DESCRIPTION

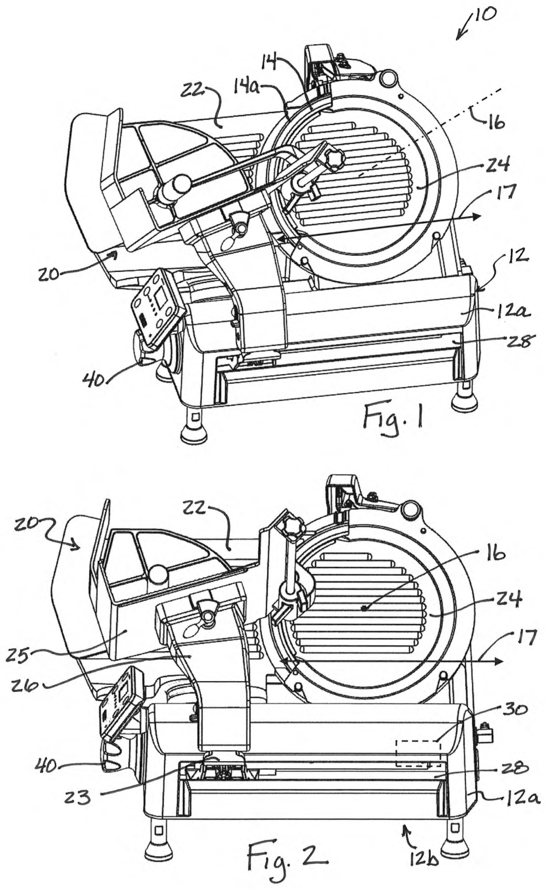

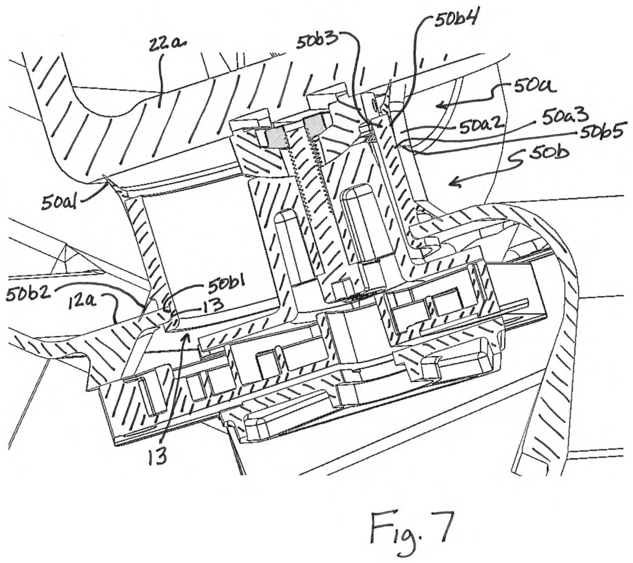

Referring to Figs. 1-7, a food product slicer 10 includes a body or base 12 (e.g., housing 12a and/or cast base or base frame 12b) and a circular, motor-driven slicing knife 14 that is mounted to the body for rotation about an axis 16. Fig. 2 depicts a right-side view of the slicer. The left side of Fig. 2, where the controls are located, is generally referred to as the front side of the slicer (which is where an operator stands for slicing), the right side of Fig. 2 is generally referred to as the rear side of the slicer. A food product can be supported on a manually operable (or motor driven) food carriage 20 which moves the food product to be sliced past the cutting edge 14a of the rotating slicing knife 14. The food carriage 20 reciprocates back and forth along a linear path 17 so that the lower end of the bulk food product slides along the surface of a gauge plate 22, is cut by the knife 14 and then slides along a knife cover plate 24. The food carriage 20 includes a tray 25 mounted on a tray arm 26 that is mounted on a transport 23 and that orients the food carriage tray at the appropriate angle (typically perpendicular) to the knife cutting-edge plane. The food carriage arm reciprocates in a slot 28 at a lower portion of the base 12. The carriage 20 can be moved manually (e.g., by a handle) and/or the carriage 20 may also be automatically driven (e.g., as by an internal motor 30 that drives a belt that is linked internally to the arm 26 or transport 23).

A gauge plate system includes a rotatable knob 40 (connected to an opening in the base 12) that includes a grip part and an internal cam part. The cam part includes an axially facing spiral cam slot that receives a follower pin of a follower (not shown) that is part of an assembly that is linked to move the gauge plate.

The gauge plate 22 includes a foot portion 22a and a seal assembly 50 extends between the housing 12a and the and the lower surface of the foot portion 22a. The seal assembly covers and seals the gauge plate plane adjustment assembly 60. The exact configuration of the gauge plate plane adjustment assembly can vary, but here includes front and rear set screws 62 and side bolts 64 that enable some adjustment of the orientation of the plane of the gauge plate slide surface relative to the plane of the slicer knife cutting edge 14a.

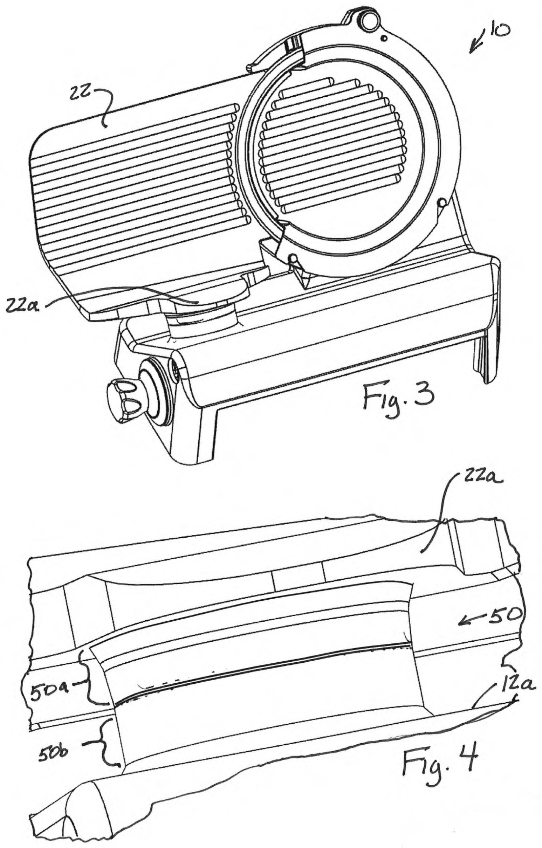

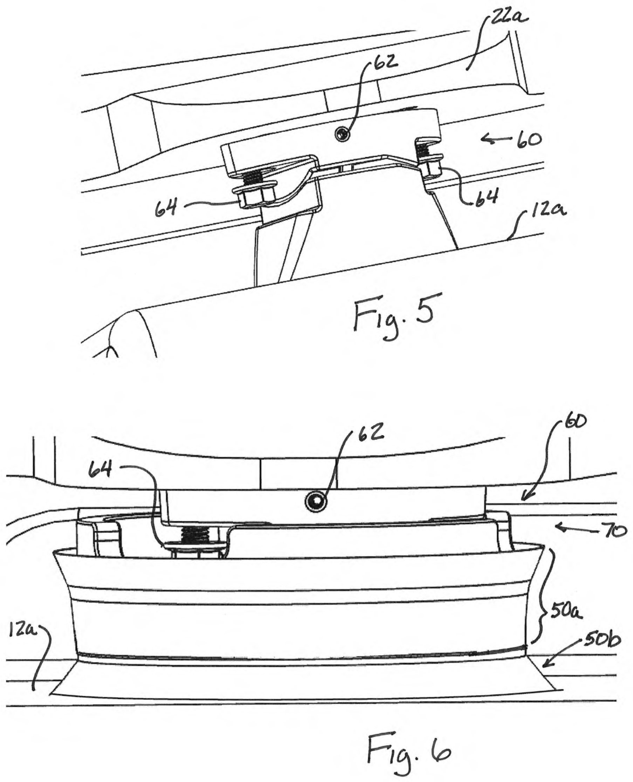

Here, adequate space/area underneath the gage plate is provided so that tools can be used for the adjustment, and the seal assembly 50 is designed so that it can be split so that one seal part 50a can slide over the other seal part 50b and expose the set screws 62 and bolts. This (Fig. 6) is the access configuration of the seal assembly. When adjustment is complete, the seal part 50a can be slid upward to again seal against the lower surface of the foot portion 22a in order to seal everything as needed. This (Fig. 4) is the sealing configuration of the seal assembly. Thus, the seal parts 50a and 50b have a relative telescoping movement between the access configuration and the sealing configuration.

The lower seal part 50b is captured and retained on the housing 12a by an annular groove or slot 50b1 that engages an inner edge 13a of an opening 13 in the housing 12a. This arrangement provides for a stable axial position of the lower seal part 50b during movement of the upper seal part 50a. The lower seal part 50b may also be keyed to the housing (i.e., to prevent rotation of the seal part 50b in the housing opening).

The upper seal part 50a includes a sealing lip 50a1 to seat against the lower or bottom surface of the foot portion 22a, and the lower seal part 50b includes a sealing lip 50b2 to seal against the upper surface of the base in the region of the opening 13 in the base/housing.

In the sealing configuration, a portion 50a2 of the upper seal part 50a overlaps a portion 50b3 of the lower seal part. The lower seal part 50b may include a distal end with an annular recess 50b4 that forms the portion 50b3 of the lower seal part. In the sealing configuration of the seal assembly, the portion 50a2 of the upper seal part surrounds and is located in the annular recess 50b4.

In embodiments, in the sealing configuration of the seal assembly, a distal end edge 50a3 of the portion 50a2 of the upper seal part abuts a step 50b5 of the lower seal part, the step 50b5 being adjacent to and defining one side of the annular recess 50b4.

In the access configuration of the seal assembly, a gap 70 is provided between the seal assembly 50 and the lower surface of the foot portion, and at least one adjustment component (e.g., a screw, bolt or other fastener) of the gauge plate plane adjustment assembly 60 are accessible through the gap.

In embodiments, an axial length of the seal assembly 50 in the access configuration is less than seventy-five percent of an axial length of the seal assembly in the sealing configuration.

This seal assembly maintains a good seal in the transition between the housing and the gauge plate. The split seals may be overlapped like shingles to prevent any liquid intrusion. The seal system enables "above the slicer" adjustment of the gauge plate plane orientation. The gauge plate can be set and then tightened in 2 operations. This allows for the operator to adjust the gauge plate while being able to see the gauge plate relative to the knife (most other adjustment methods occur underneath the slicer and require the slicer to be put up on its side).

It is to be clearly understood that the above description is intended by way of illustration and example only and is not intended to be taken by way of limitation. Variations are possible.

## Claims

1. A food product slicer, comprising:
a base;
a knife mounted for rotation relative to the base;
a carriage assembly mounted to the base for reciprocal movement back and forth past a cutting edge of the knife;
a gauge plate mounted for movement between a closed position that prevents slicing and multiple open positions that permit slicing at respective thicknesses;
a gauge plate plane adjustment assembly for adjusting an orientation of a plane of the gauge plate relative to a plane of an edge of the knife; and
a seal assembly covering the gauge plate plane adjustment assembly and having first and second seal parts that are movable relative to each other between a sealing configuration of the seal assembly and an access configuration of the seal assembly.

2. The slicer of claim 1, wherein the gauge plate includes a foot part, and the first seal part engages a lower surface of the foot part when the seal assembly is in the sealing configuration, and the first seal part is moved away from the lower surface when the seal assembly is in the access position.

3. The slicer of claim 2, wherein the first seal part is movable in a telescoping manner relative to the second seal part.

4. The slicer of claim 3, wherein the second seal part is engaged with an opening in the base.

5. The slicer of claim 4, wherein the second seal part includes an annular groove or slot in which an edge of the opening in the base is engaged to stabilize a position of the second seal part during movement of the first seal part.

6. The slicer of claim 3, wherein, in the sealing configuration, a portion of the first seal part overlaps a portion of the second seal part.

7. The slicer of claim 6, wherein the second seal part includes a distal end with an annular recess, wherein, in the sealing configuration of the seal assembly, the portion of the first seal part surrounds and is located in the annular recess.

8. The slicer of claim 7, wherein, in the sealing configuration of the seal assembly, a distal end edge of the portion of the first seal part abuts a step of the second seal part, the step being adjacent the annular recess.

9. The slicer of claim 2, wherein, in the access configuration of the seal assembly, a gap is provided between the seal assembly and the lower surface and at least one adjustment component of the gauge plate plane adjustment assembly are accessible through the gap.

10. The slicer of claim 8, wherein the adjustment component comprises a fastener.

11. The slicer of claim 8, wherein an axial length of the seal assembly in the access configuration is less than seventy-five percent of an axial length of the seal assembly in the sealing configuration.
